# EUROPÄISCHE PATENTSCHRIFT

(11) **EP 1 155 881 B1**
(45) Veröffentlichungstag und Bekanntmachung des Hinweises auf die Patenterteilung: **15.02.2006**
(21) Anmeldenummer: 01107325.1
(22) Anmeldetag: 24.03.2001
(51) Int. Cl.: B60D 1/145, B60D 1/50, B64F 1/22, F16F 9/06

(54) **Kupplung insbesondere für eine Schleppstange zur Verbindung eines Schleppfahrzeugs mit einem Flugzeug**
Coupling, especially for a towing bar to connect a tractor to an aircraft
Accouplement, notamment pour une barre de remorquage pour connecter un tracteur à un avion

(30) Priorität: 18.05.2000 DE 10024468
(43) Veröffentlichungstag der Anmeldung: 21.11.2001
(73) Patentinhaber: SCHOPF MASCHINENBAU GMBH, D-73760 Ostfildern (DE)
(72) Erfinder: Diez, Helmut, 70794 Filderstadt (DE)
(74) Vertreter: Pfiz, Thomas

(56) Entgegenhaltungen:
- DE-A- 1 750 212
- DE-A- 4 219 237
- GB-A- 2 050 977
- US-A- 3 083 000
- US-A- 3 649 048
- US-A- 3 944 198
- US-A- 3 970 292
- US-A- 4 191 280

## Beschreibung

Die Erfindung betrifft eine Kupplung insbesondere für eine Schleppstange zur Verbindung eines Schleppfahrzeugs mit einem Flugzeug, mit einem Gehäuse, einem darin begrenzt axialverschieblich angeordneten Kupplungsstößel und einem in Wirkverbindung mit dem Kupplungsstößel befindlichen Federelement zum Abfedern von Axialstößen.

Kupplungen dieser Art werden bei Flugzeugschleppern eingesetzt, um die zum Bugsieren des Flugzeugs erforderlichen Kräfte in die Radaufhängung des Bugrads einleiten zu können, ohne daß Kraftstöße etwa aufgrund unsachgemäßer Fahrzeugführung oder Bodenhindernissen zu ungewollten Beschädigungen führen. Zu diesem Zweck ist es bekannt, fahrzeugfeste Kupplungen mit Tellerfederpaketen als Federelement einzusetzen, um die im Bereich von bis zu einigen 100 kN liegenden Kräfte aufzunehmen. Als nachteilig hierbei wird die hohe Federsteifheit bzw. der geringe Federweg angesehen. Alternativ wurden bereits Elastormerfedern eingesetzt, die jedoch eine störend große Baulänge aufweisen. Allen genannten Anordnungen ist gemeinsam, daß lediglich Schub- bzw. Drucklasten abgefedert werden, während Zugkräfte in starrer Verbindung übertragen werden.

Ausgehend hiervon liegt der Erfindung die Aufgabe zugrunde, eine Kupplung der gattungsgemäßen Art dahingehend zu verbessern, daß die zuvor genannten Nachteile vermieden werden und ein breites Einsatzfeld bei optimaler Kraftübertragung zuverlässig abgedeckt werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine Kupplung mit einem pneumatisch oder hydropneumatisch arbeitenden Speicher zur bidirektional wirksamen Verringerung von Axialstössen vorzusehen. Dementsprechend wird erfindungsgemäß vorgeschlagen, daß das Federelement durch eine Gasfeder gebildet ist, und daß die Gasfeder bei Axialverschiebung des Kupplungsstößels aus seiner Ruhelage heraus unabhängig von der Verschieberichtung über Betätigungsmittel komprimierbar ist. Damit ist es möglich, bei kompakter Bauform und weitgehend trägheitsfreiem Ansprechen lange Federwege zu realisieren und auch extreme Belastungen aufzunehmen. Ein weiterer besonderer Vorteil liegt darin, daß unabhängig von der Belastungsrichtung, also bei Zug- und Schubkräften die Kompression bzw. Verdichtung der Gasfeder dazu führt, daß eine entsprechende Gegen- bzw. Rückstellkraft auf den kraftübertragenden Schubstößel wirkt.

Eine besonders bevorzugte Ausgestaltung der Erfindung sieht vor, daß die Betätigungsmittel eine Hydraulikeinheit zur hydraulischen Kopplung des Kupplungsstößels mit der Gasfeder umfassen. Für eine selbststeuernde Ausführung ist es vorteilhaft, wenn die Hydraulikeinheit eine durch Axialverschiebung des Kupplungsstößels verkleinerbare Arbeitskammer aufweist, wobei die aus der Arbeitskammer verdrängte Hydraulikflüssigkeit die Gasfeder beaufschlagt.

Eine bei Zug- und Druckbelastung gleichermaßen dämpfende Wirkung wird dadurch erreicht, daß die Hydraulikeinheit zwei mittels des Kupplungsstößels in Abhängigkeit von der Verschieberichtung wechselweise betätigte Arbeitskolben zur Verdrängung von Hydraulikflüssigkeit gegen die Gasfeder aufweist. Dabei ist es besonders günstig, wenn die Arbeitskammer als ein Hydraulikflüssigkeit enthaltender Ringraum koaxial zwischen dem Kupplungsstößel und dem umgebenden zylindrischen Gehäuse angeordnet und stirnseitig durch jeweils einen ringförmigen Arbeitskolben begrenzt ist.

Vorteilhafterweise sind die Arbeitskolben durch jeweils ein Mitnahmeorgan des Kupplungsstößels wechselweise gegeneinander bewegbar und durch jeweils einen gehäusefesten Kolbenanschlag vorzugsweise an ihren voneinander abgewandten Außenseiten in der Ruhelage abgestützt. Dabei sollte der Verschiebeweg des Kupplungsstößels in Zug- und Schubrichtung durch jeweils einen gehäusefesten Stößelanschlag begrenzt sein.

Eine besonders kompakte Bauform läßt sich dadurch realisieren, daß die Gasfeder vorzugsweise konzentrisch innnerhalb des Kupplungsstößels angeordnet ist. Eine weitere vorteilhafte Ausgestaltung sieht vor, daß die Hydraulikeinheit mindestens einen vorzugsweise radial in den Kupplungsstößel führenden, gegebenenfalls zugleich als Drosselglied wirkenden Zuführkanal zur Beaufschlagung der Gasfeder aufweist. Dabei sollte sichergestellt sein, daß der Zuführkanal über den gesamten Verschiebebereich des Kupplungsstößels mit der Arbeitskammer kommuniziert.

Für die Anwendung großer Druckverhältnisse bei hoher Unempfindlichkeit ist es von Vorteil, wenn ein Trennkolben zwischen der Hydraulikeinheit und dem Gasvolumen der Gasfeder angeordnet ist.

Zur Überwachung des Belastungszustandes ist es vorteilhaft, wenn die Ruhelage und die Verschieberichtung des Kupplungsstößels über zwei gehäusefeste, vorzugsweise auf die Arbeitskolben in deren Anschlagstellung ansprechende Näherungsschalter erfaßbar sind. Zur Ermittlung des Kraftverlaufs und gegebenenfalls zur Einrichtung eines Überlastschutzes ist ein Drucksensor für den Arbeitsdruck der Hydraulikeinheit vorgesehen.

Um den Federweg entsprechend der auftretenden Belastung anzupassen, ist es vorteilhaft, wenn der Vorspannüberdruck der Gasfeder nach Maßgabe einer vorgegebenen maximalen Axialbelastung des Kupplungsstößels eingestellt ist.

Zur Verbesserung der Manövrierfähigkeit ist es von Vorteil, wenn der Kupplungsstößel an seinem freien Ende vorzugsweise als vertikal ausgerichtetes Drehgelenkglied ausgebildete Verbindungsmittel aufweist.

Eine weitere besonders vorteilhafte Ausgestaltung der Erfindung besteht darin, daß das Gehäuse endseitig starr mit einer Schleppstange verbunden ist, und daß der mit einem freien Ende an einem Schleppfahrzeug oder Flugzeug anlenkbare Kupplungsstößel in Längsrichtung der Schleppstange verschiebbar ist. Damit kann die Schleppstange als Aufnahmeraum genutzt werden, wobei durch die endseitige Anlenkung sichergestellt ist, daß nur Axialkräfte auf das Flugzeug übertragen werden. Alternativ ist es auch möglich, daß das Gehäuse starr mit einem Schleppfahrzeug vorzugsweise im Stoßfängerbereich verbunden ist, so daß der Kupplungsstößel an einem überstehenden freien Ende mit einer Schleppstange verbindbar ist.

Ein weiterer Aspekt der Erfindung besteht in einer Schleppstange zur Verbindung eines Schleppfahrzeugs mit einem Flugzeug, welche eine erfindungsgemäße Kupplung aufweist.

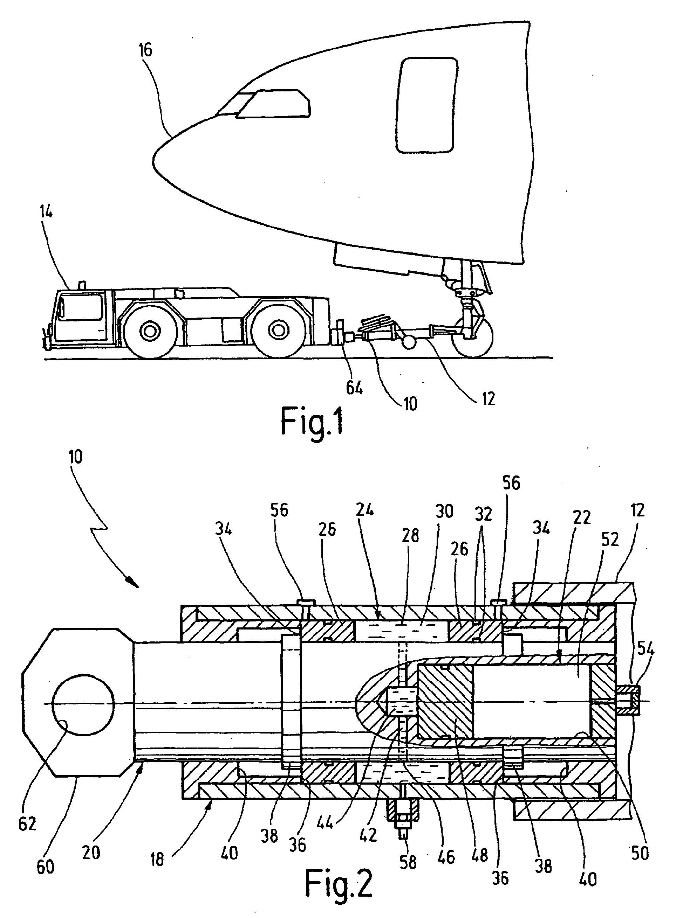

Im folgenden wird die Erfindung anhand eines in der Zeichnung in schematischer Weise dargestellten Ausführungsbeispiels näher erläutert. Es zeigen
- Fig. 1: ein über eine Schleppstange mit dem Bugrad eines Flugzeugs verbundenes Schleppfahrzeug in schaubildlicher Darstellung;
- Fig. 2: eine in die Schleppstange integrierte hydropneumatisch arbeitende Kupplung in der Ruhestellung im Axialschnitt;
- Fig. 3: und 4 die Kupplung bei Schub- und Zugbelastung in einer Fig. 2 entsprechenden Darstellung.

Die in der Zeichnung dargestellte Kupplung 10 dient als integraler Bestandteil einer Schleppstange 12 zur bidirektionalen Aufnahme bzw. Dämpfung von Axialstößen bei der Verbindung eines Schleppfahrzeugs 14 mit einem Flugzeug 16. Sie umfaßt zu diesem Zweck ein zylindrisches Gehäuse 18, einen darin begrenzt axialverschieblich angeordneten Kupplungsstößel 20, eine in dem Kupplungsstößel angeordnete Gasfeder 22 und eine Hydraulikeinheit 24 als Betätigungsmittel zur Kompression der Gasfeder bei einer Axialauslenkung des Kupplungsstößels.

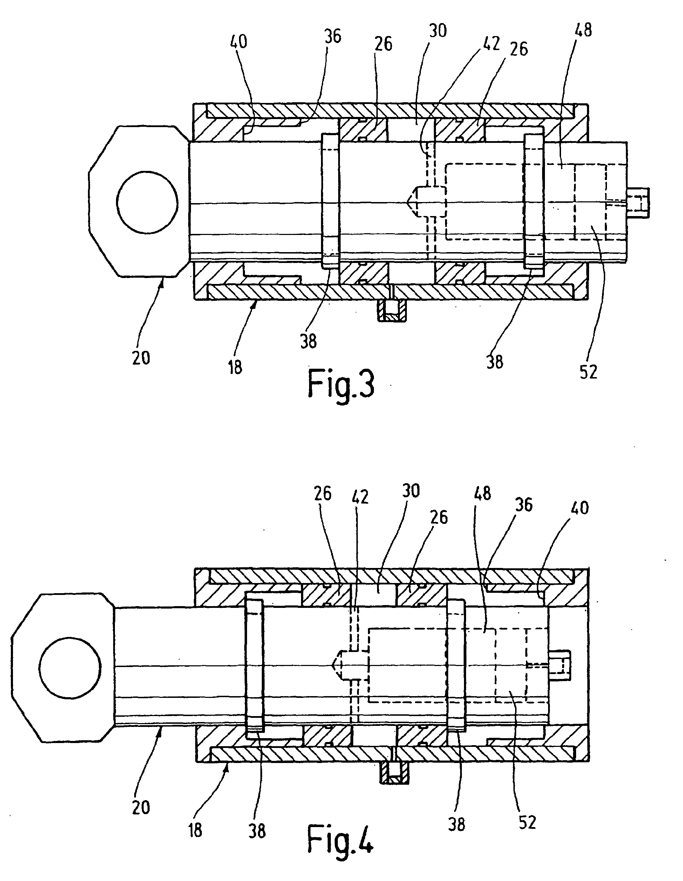

Wie in Fig. 2 gezeigt, weist die Hydraulikeinheit 24 zwei durch den Kupplungsstößel 20 betätigte Arbeitskolben 26 und eine Hydraulikflüssigkeit 28 enthaltende Arbeitskammer 30 auf. Die Arbeitskammer 30 ist als Ringraum koaxial zwischen dem Kupplungsstößel 20 und dem umgebenden Gehäuse 18 angeordnet und stirnseitig durch die ringförmigen Arbeitskolben 26 begrenzt. Die Arbeitskolben 26 sind dabei schwimmend zwischen dem Kupplungsstößel 20 und dem Gehäuse 18 gelagert und über Ringdichtungen 32 innen- und außenseitig abgedichtet. In der in Fig. 2 gezeigten Ruhelage liegen die Arbeitskolben 26 an ihren voneinander abgewandten Außenseiten 34 gegen gehäusefeste Kolbenanschläge 36 an.

Zur wechselweisen Mitnahme der Arbeitskolben 26 weist der Kupplungsstößel 20 jeweils einen zugeordneten Ringbund 38 als Mitnahmeorgane auf. Diese kommen außenseitig mit den Arbeitskolben 26 in Eingriff und bilden zugleich Anschlagstücke zur Begrenzung des Verschiebewegs an gehäusefesten Stößelanschlägen 40.

Zur Beaufschlagung der Gasfeder 22 ist die Arbeitskammer 30 über einen Zuführkanal 42 mit einer zentral in dem Kupplungsstößel 20 liegenden Innenkammer 44 verbunden. Der Zuführkanal verläuft radial durch den Kupplungsstößel 20, wobei die einander diametral gegenüberliegenden mantelseitigen Kanalöffnungen 46 im gesamten Verschiebebereich in die Arbeitskammer 30 münden.

Die Innenkammer 44 ist über einen Trennkolben 48 von dem in einem konzentrischen Zylinderraum 50 innerhalb des Kupplungsstößels 20 befindlichen Gasvolumen 52 der Gasfeder 22 getrennt. Zur Änderung der Vorspannung ist der Gasdruck in dem Gasvolumen über einen stirnseitigen Druckgasanschluß 54 einstellbar. Dies kann zweckmäßig nach Maßgabe der Masse des zu bewegenden Flugzeugs 16 erfolgen.

Um die Einnahme der Ruhelage und die Verschieberichtung des Kupplungsstößels 20 erfassen zu können, sind zwei gehäusefeste Näherungsschalter 56 vorgesehen, die jeweils auf die Anschlagstellung der Arbeitskolben 26 an den Kolbenanschlägen 36 ansprechen. Weiter ermöglicht es ein an die Arbeitskammer 30 angeschlossener Drucksensor 58, den Kraftverlauf beim Manövrieren des Flugzeugs 16 zu erfassen und bei einer Überlastanzeige gegebenenfalls Gegenmaßnahmen zu treffen.

Zur gelenkigen Verbindung mit dem Schleppfahrzeug 14 weist der Kupplungsstößel 20 an seinem freien Ende 60 ein vertikal ausgerichtetes Lagerauge 62 zur Aufnahme eines fahrzeugseitig festgelegten Steckbolzens auf. Durch diese Maßnahme wird sichergestellt, daß ausschließlich Axialkräfte über die Kupplung 10 übertragen werden, während Querkräfte lediglich zu einer entsprechenden Schwenkbewegung der Schleppstange 12 führen.

Grundsätzlich ist es jedoch auch möglich, daß das Gehäuse 18 fest an das Schleppfahrzeug 14 angeflanscht wird, wofür sich vor allem der Stoßfängerbereich 64 eignet, weil dort ausreichend Aufnahmeraum für die nach innen gerichtete Gasfeder 22 zur Verfügung steht, während das freie Ende 60 des Kupplungsstößels 20 in Fahrrichtung absteht.

Wie in Fig. 3 gezeigt, taucht bei einer Schubbelastung der Kupplungsstößel 20 in das Gehäuse 18 ein, wobei der im Bereich der Gasfeder 22 angeordnete rechte Arbeitskolben 26 durch den zugehörigen Kolbenanschlag 36 abgestützt wird, während der zweite (linke) Arbeitskolben über den zugeordneten Ringbund 38 unter Verkleinerung des Arbeitsraums 30 mitbewegt wird, bis die dargestellte Anschlaglage des außer Eingriff befindlichen rechten Ringbunds 38 erreicht ist. Bei Zugbelastung wird umgekehrt der rechte gegen den linken Arbeitskolben 26 bewegt (Fig. 4). Aufgrund des symmetrischen Aufbaus bezüglich einer Radialmittelebene der Arbeitskammer 30 bewirkt das verdrängte Flüssigkeitsvolumen bei einer Auslenkung aus der Ruhelage stets eine Kompressionsbewegung des Trennkolbens 48 gegen das Gasvolumen 52, wobei der Zuführkanal 42 als Drosselglied wirkt, so daß unabhängig von der Verschieberichtung sowohl Druck- als auch Zugstöße gedämpft werden.

Grundsätzlich ist der Einsatz der erfindungsgemäßen Kupplung nicht auf Flugzeugschlepper begrenzt. Vielmehr kommen auch andere Bereiche beispielsweise zur Übertragung hoher Kräfte bei Schleppverbänden von Straßen- oder Schienenfahrzeugen in Betracht.

## Patentansprüche

1. Kupplung insbesondere für eine Schleppstange (12) zur Verbindung eines Schleppfahrzeugs (14) mit einem Flugzeug (16), mit einem Gehäuse (18), einem darin begrenzt axialverschieblich angeordneten Kupplungsstößel (20) und einem in Wirkverbindung mit dem Kupplungsstößel (20) befindlichen Federelement (22) zum Abfedern von Axialstößen, **dadurch gekennzeichnet, daß** das Federelement durch eine Gasfeder (22) gebildet ist, und daß die Gasfeder (22) bei Axialverschiebung des Kupplungsstößels (20) aus seiner Ruhelage heraus unabhängig von der Verschieberichtung über Betätigungsmittel (24) komprimierbar ist.

2. Kupplung nach Anspruch 1, **dadurch gekennzeichnet, daß** die Betätigungsmittel eine Hydraulikeinheit (24) zur hydraulischen Kopplung des Kupplungsstößels (20) mit der Gasfeder (22) umfassen.

3. Kupplung nach Anspruch 2, **dadurch gekennzeichnet, daß** die Hydraulikeinheit (24) eine durch Axialverschiebung des Kupplungsstößels (20) verkleinerbare Arbeitskammer (30) aufweist, und daß die aus der Arbeitskammer (30) verdrängte Hydraulikflüssigkeit (28) die Gasfeder (22) beaufschlagt.

4. Kupplung nach Anspruch 2 oder 3, **dadurch gekennzeichnet, daß** die Hydraulikeinheit (24) zwei mittels des Kupplungsstößels (20) in Abhängigkeit von der Verschieberichtung wechselweise betätigte Arbeitskolben (26) zur Verdrängung von Hydraulikflüssigkeit (28) gegen die Gasfeder (22) aufweist.

5. Kupplung nach Anspruch 3 oder 4, **dadurch gekennzeichnet, daß** die Arbeitskammer (30) als ein Hydraulikflüssigkeit (28) enthaltender Ringraum koaxial zwischen dem Kupplungsstößel (20) und dem umgebenden zylindrischen Gehäuse (18) angeordnet und stirnseitig durch jeweils einen ringförmigen Arbeitskolben (26) begrenzt ist.

6. Kupplung nach Anspruch 4 oder 5, **dadurch gekennzeichnet, daß** die Arbeitskolben (26) durch jeweils ein Mitnahmeorgan (38) des Kupplungsstößels (20) wechselweise gegeneinander bewegbar sind.

7. Kupplung nach einem der Ansprüche 4 bis 6, **dadurch gekennzeichnet, daß** die Arbeitskolben (26) durch jeweils einen gehäusefesten Kolbenanschlag (36) vorzugsweise an ihren voneinander abgewandten Außenseiten (34) in der Ruhelage abgestützt sind.

8. Kupplung nach einem der Ansprüche 1 bis 7, **dadurch gekennzeichnet, daß** der Verschiebeweg des Kupplungsstößels (20) in Zug- und Schubrichtung durch jeweils einen gehäusefesten Stößelanschlag (40) begrenzt ist.

9. Kupplung nach einem der Ansprüche 1 bis 8, **dadurch gekennzeichnet, daß** die Gasfeder (22) vorzugsweise konzentrisch innnerhalb des Kupplungsstößels (20) angeordnet ist.

10. Kupplung nach einem der Ansprüche 2 bis 9, **dadurch gekennzeichnet, daß** die Hydraulikeinheit (24) mindestens einen vorzugsweise radial in den Kupplungsstößel (20) führenden, gegebenenfalls zugleich als Drosselglied wirkenden Zuführkanal (42) zur Beaufschlagung der Gasfeder (22) aufweist.

11. Kupplung nach Anspruch 10, **dadurch gekennzeichnet, daß** der Zuführkanal (42) über den gesamten Verschiebebereich des Kupplungsstößels (20) mit der Arbeitskammer (30) kommuniziert.

12. Kupplung nach einem der Ansprüche 2 bis 11, **dadurch gekennzeichnet, daß** ein Trennkolben (48) zwischen der Hydraulikeinheit (24) und dem Gasvolumen (52) der Gasfeder (22) angeordnet ist.

13. Kupplung nach einem der Ansprüche 1 bis 12, **dadurch gekennzeichnet, daß** die Ruhelage und die Verschieberichtung des Kupplungsstößels (20) über zwei gehäusefeste, vorzugsweise auf die Arbeitskolben (26) in deren Anschlagstellung ansprechende Näherungsschalter (56) erfaßbar ist.

14. Kupplung nach einem der Ansprüche 1 bis 13, **dadurch gekennzeichnet, daß** die Gasfeder (22) unter Druckerhöhung ihres Gasvolumens (52) nach Maßgabe einer vorgegebenen maximalen Axialbelastung des Kupplungsstößels (20) über einen Druckgasanschluß (54) vorgespannt ist.

15. Kupplung nach einem der Ansprüche 2 bis 14, **gekennzeichnet durch** einen Drucksensor (58) zur Erfassung des die Gasfeder (22) beaufschlagenden Arbeitsdrucks der Hydraulikeinheit (24).

16. Kupplung nach einem der Ansprüche 1 bis 15, **dadurch gekennzeichnet, daß** der Kupplungsstößel (20) an einem freien Ende (60) angeordnete, vorzugsweise als vertikal ausgerichtetes Drehgelenkglied ausgebildete Verbindungsmittel (62) aufweist.

17. Kupplung nach einem der Ansprüche 1 bis 16, **dadurch gekennzeichnet, daß** das Gehäuse (18) endseitig starr mit einer Schleppstange (12) verbunden ist, und daß der mit einem freien Ende (60) an einem Schleppfahrzeug (14) oder Flugzeug (16) anlenkbare Kupplungsstößel (20) in Längsrichtung der Schleppstange (12) verschiebbar ist.

18. Kupplung nach einem der Ansprüche 1 bis 16, **dadurch gekennzeichnet, daß** das Gehäuse (18) starr mit einem Schleppfahrzeug (14) vorzugsweise im Stoßfärigerbereich verbunden ist, so daß der Kupplungsstößel (20) an einem überstehenden freien Ende (60) mit einer Schleppstange (12) verbindbar ist.

19. Schleppstange zur Verbindung eines Schleppfahrzeugs (14) mit einem Flugzeug (16), **gekennzeichnet durch** eine Kupplung (10) nach einem der vorhergehenden Ansprüche.

## Claims

1. Coupling, in particular for a towing bar (12) to connect a tractor (14) to an aircraft (16), with a housing (18), a coupling push rod (20) arranged therein axially movably to a limited extent and a spring element (22) located in active connection with the coupling push rod (20) for cushioning axial jolts,
**characterized in that** the spring element is formed by a gas spring (22), and that the gas spring (22) is compressible via actuating means (24) on axial movement of the coupling push rod (20) from its resting position, regardless of the direction of movement.

2. Coupling according to claim 1, **characterized in that** the actuating means comprise a hydraulic unit (24) for the hydraulic coupling of the coupling push rod (20) to the gas spring (22).

3. Coupling according to claim 2, **characterized in that** the hydraulic unit (24) has a working chamber (30) that can be made smaller by axial movement of the coupling push rod (20), and that the hydraulic fluid (28) displaced from the working chamber (30) acts on the gas spring (22).

4. Coupling according to claim 2 or 3, **characterized in that** the hydraulic unit (24) has two working pistons (26) actuated alternately by means of the coupling push rod (20) depending on the direction of movement for displacing hydraulic fluid (28) against the gas spring (22).

5. Coupling according to claim 3 or 4, **characterized in that** the working chamber (30) is arranged as an annular space containing hydraulic fluid (28) coaxially between the coupling push rod (20) and the surrounding cylindrical housing (18) and is limited at the faces by an annular working piston (26) in each case.

6. Coupling according to claim 4 or 5, **characterized in that** the working pistons (26) are movable alternately towards one another by a carrier organ (38) of the coupling push rod (20) in each case.

7. Coupling according to one of claims 4 to 6,
**characterized in that** the working pistons (26) are supported in the resting position respectively by a piston end stop (36) fixed in the housing, preferably at their outer sides (34) facing away from one another.

8. Coupling according to one of claims 1 to 7,
**characterized in that** the movement path of the coupling push rod (20) in pulling and pushing direction is limited in each case by a push rod end stop (40) fixed in the housing.

9. Coupling according to one of claims 1 to 8,
**characterized in that** the gas spring (22) is arranged preferably concentrically inside the coupling push rod (20).

10. Coupling according to one of claims 2 to 9,
**characterized in that** the hydraulic unit (24) has at least one supply channel (42), preferably leading radially into the coupling push rod (20), acting if applicable at the same time as a throttle element, for acting on the gas spring (22).

11. Coupling according to claim 10, **characterized in that** the supply channel (42) communicates with the working chamber (30) over the entire movement range of the coupling push rod (20).

12. Coupling according to one of claims 2 to 11,
**characterized in that** a separating piston (48) is arranged between the hydraulic unit (24) and the gas volume (52) of the gas spring (22).

13. Coupling according to one of claims 1 to 12,
**characterized in that** the resting position and the direction of movement of the coupling push rod (20) are detectable via two proximity switches (56) fixed in the housing, preferably responding to the working pistons (26) in their end stop position.

14. Coupling according to one of claims 1 to 13,
**characterized in that** the gas spring (22) is pretensioned under pressure increase of its gas volume (52) according to a predetermined maximum axial loading of the coupling push rod (20) via a pressure gas connection (54).

15. Coupling according to one of claims 2 to 14,
**characterized by** a pressure sensor (58) for detecting the working pressure of the hydraulic unit (24) acting on the gas spring (22).

16. Coupling according to one of claims 1 to 15,
**characterized in that** the coupling push rod (20) has connecting means (62), preferably formed as vertically oriented pivot element, arranged at a free end (60).

17. Coupling according to one of claims 1 to 16,
**characterized in that** the housing (18) is connected at the end side rigidly to a towing bar (12), and that the coupling push rod (20) connectable by a free end (60) to a tractor (14) or aircraft (16) is movable in a longitudinal direction of the towing bar (12).

18. Coupling according to one of claims 1 to 16,
**characterized in that** the housing (18) is connected rigidly to a tractor (14) preferably in the bumper area, so that the coupling push rod (20) is connectable at a projecting free end (60) to a towing bar (12).

19. Towing bar for connecting a tractor (14) to an aircraft (16), **characterized by** a coupling (10) according to one of the preceding claims.

## Revendications

1. Accouplement, notamment pour une barre de remorquage (12) destinée à raccorder un véhicule de remorquage (14) à un avion (16), doté d'un carter (18), d'un poussoir d'accouplement (20) disposé à l'intérieur de celui-ci de façon axialement mobile et délimitée, et d'un élément formant ressort (22) en liaison fonctionnelle avec le poussoir d'accouplement (20), destiné à amortir les secousses axiales, **caractérisé en ce que** l'élément formant ressort est formé par un ressort à gaz (22), et **en ce que** le ressort à gaz (22) peut être comprimé par des moyens d'actionnement (24) à l'occasion d'un déplacement axial du poussoir d'accouplement (20) depuis sa position de repos, indépendamment de la direction de déplacement.

2. Accouplement selon la revendication 1, **caractérisé en ce que** les moyens d'actionnement comportent une unité hydraulique (24) destinée à l'accouplement hydraulique du poussoir d'accouplement (20) au ressort à gaz (22).

3. Accouplement selon la revendication 2, **caractérisé en ce que** l'unité hydraulique (24) comprend une chambre de travail (30) pouvant être réduite par déplacement axial du poussoir d'accouplement (20), et **en ce que** le fluide hydraulique (28) refoulé de la chambre de travail (30) alimente le ressort à gaz (22).

4. Accouplement selon la revendication 2 ou 3, **caractérisé en ce que** l'unité hydraulique (24) comprend deux pistons de travail (26), destinés à refouler du fluide hydraulique (28) contre le ressort à gaz (22), actionnés à tour de rôle au moyen du poussoir d'accouplement (20) en fonction de la direction du déplacement.

5. Accouplement selon la revendication 3 ou 4, **caractérisé en ce que** la chambre de travail (30), en tant qu'espace annulaire contenant un fluide hydraulique (28), est disposée de manière coaxiale entre le poussoir d'accouplement (20) et le carter cylindrique circulaire (18) et est délimitée côté frontal par respectivement un piston de travail annulaire (26).

6. Accouplement selon la revendication 4 ou 5, **caractérisé en ce que** les pistons de travail (26) peuvent être déplacés à tour de rôle les uns contre les autres par respectivement un organe d'entraînement (38) du poussoir d'accouplement (20).

7. Accouplement selon l'une quelconque des revendications 4 à 6, **caractérisé en ce que** les pistons de travail (26) sont soutenus dans la position de repos, de préférence contre leurs faces externes (34) opposées les unes aux autres, par respectivement une butée de piston (36) solidaire du boîtier.

8. Accouplement selon l'une quelconque des revendications 1 à 7, **caractérisé en ce que** le trajet de déplacement du poussoir d'accouplement (20) est délimité dans la direction de traction et de poussée par respectivement une butée de poussoir (40) solidaire du boîtier.

9. Accouplement selon l'une quelconque des revendications 1 à 8, **caractérisé en ce que** le ressort à gaz (22) est disposé de préférence de manière concentrique à l'intérieur du poussoir d'accouplement (20).

10. Accouplement selon l'une quelconque des revendications 2 à 9, **caractérisé en ce que** l'unité hydraulique (24) comprend au moins un canal d'alimentation (42) destiné à alimenter le ressort à gaz (22), agissant éventuellement par la même occasion comme organe d'étranglement, menant de préférence dans le sens radial à l'intérieur du poussoir d'accouplement (20).

11. Accouplement selon la revendication 10, **caractérisé en ce que** le canal d'alimentation (42) communique avec la chambre de travail (30) par l'intermédiaire de l'ensemble de la zone de déplacement du poussoir d'accouplement (20).

12. Accouplement selon l'une quelconque des revendications 2 à 11, **caractérisé en ce qu'**un piston de séparation (48) est disposé entre l'unité hydraulique (24) et le volume de gaz (52) du ressort à gaz (22).

13. Accouplement selon l'une quelconque des revendications 1 à 12, **caractérisé en ce que** la position de repos et la direction de déplacement du poussoir d'accouplement (20) peuvent être détectées par deux commutateurs de proximité (56) solidaires du carter, réagissant de préférence aux pistons de travail (26) dans leur position de butée.

14. Accouplement selon l'une quelconque des revendications 1 à 13, **caractérisé en ce que** le ressort à gaz (22), sous l'effet de l'augmentation de la pression de son volume de gaz (52), selon une sollicitation axiale maximale prédéfinie du poussoir d'accouplement (20), est précontraint par un raccord de gaz sous pression (54).

15. Accouplement selon l'une quelconque des revendications 2 à 14, **caractérisé par** un capteur de pression (58) destiné à détecter la pression de travail de l'unité hydraulique (24) alimentant le ressort à gaz (22).

16. Accouplement selon l'une quelconque des revendications 1 à 15, **caractérisé en ce que** le poussoir d'accouplement (20) comprend des moyens de raccordement (62) disposés sur une extrémité libre (60), conçus de préférence comme un organe d'articulation rotative orienté verticalement.

17. Accouplement selon l'une quelconque des revendications 1 à 16, **caractérisé en ce que** le carter (18) est relié rigidement côté extrémité à une barre de remorquage (12), et **en ce que** le poussoir d'accouplement (20) pouvant être articulé avec une extrémité libre (60) sur un véhicule de remorquage (14) ou un avion (16) est déplaçable dans la direction longitudinale de la barre de remorquage (12).

18. Accouplement selon l'une quelconque des revendications 1 à 16, **caractérisé en ce que** le carter (18) est relié rigidement à un véhicule de remorquage (14), de préférence dans la zone du pare-chocs, de sorte que le poussoir d'accouplement (20) peut être raccordé à une barre de remorquage (12) sur une extrémité libre (60) en saillie.

19. Barre de remorquage destinée à raccorder un véhicule de remorquage (14) à un avion (16), **caractérisée par** un accouplement (10) selon l'une quelconque des revendications précédentes.
